# EUROPEAN PATENT SPECIFICATION

(11) **EP 4 267 283 B1**
(45) Date of publication and mention of the grant of the patent: **11.11.2026**
(21) Application number: 21911465.9
(22) Date of filing: 21.12.2021
(51) Int. Cl.: B01D 59/26, B01D 59/30, B01D 15/36, B01D 15/18, G21G 1/00, G21G 1/06

(54) **METHOD OF PRODUCING AND REFINING CARRIER-FREE LUTETIUM-177 USING CHROMATOGRAPHY**
VERFAHREN ZUR HERSTELLUNG UND VERFEINERUNG VON TRÄGERFREIEM LUTETIUM-177 MITTELS CHROMATOGRAPHIE
PROCÉDÉ DE PRODUCTION ET DE RAFFINAGE DE LUTÉCIUM-177 SANS SUPPORT PAR CHROMATOGRAPHIE

(30) Priority: 24.12.2020 KR 20200183771
(43) Date of publication of application: 01.11.2023
(73) Proprietor: Korea Atomic Energy Research Institute, Daejeon 34057 (KR)
(72) Inventor: CHOI, Kang Hyuk, Daejeon 34140 (KR); PARK, Ul Jae, Daejeon 35351 (KR); LEE, Jun Sig, Daejeon 34023 (KR); KIM, A Ran, Yongin-si, Gyeonggi-do 17095 (KR)
(74) Representative: Dehns
(86) International application number: PCT/KR2021/019479
(87) International publication number: WO 2022/139398

(56) References cited:
- WO-A1-2006/074960
- JP-A- 2010 223 827
- KR-A- 20140 101 543
- KR-B1- 102 266 273
- RU-C1- 2 542 733
- US-B1- 6 716 353
- US-B2- 9 816 156
- HASHIMOTO K ET AL: "Production of no-carrier-added 177Lu via the 176Yb(n, gamma)177Yb -> 177Lu process", JOURNAL OF RADIOANALYTICAL AND NUCLEAR CHEMISTRY, AKADEMIAI KIADO RT, HU, vol. 255, no. 3, 1 March 2003 (2003-03-01), pages 575 - 579, XP002678871, ISSN: 0236-5731, DOI: 10.1023/A:1022557121351

## Description

### [Technical Field]

The present invention relates to a method of producing and refining carrier-free lutetium-177 using chromatography, and more specifically to a method of producing and refining carrier-free lutetium 1-77 using chromatography having excellent resolution of lutetium and ytterbium with an eluent at a single concentration without a concentration gradient of the eluent.

### [Background Art]

Among the lanthanide metals, beta-ray-emitting nuclides have received a lot of attention for their potential use in the medical field in the 1990s. In particular, since lutetium-177 (Lu-177) has the characteristics of beta emission (E_{β max} = 498 KeV) and gamma emission (E_{γ} = 208 KeV (11%) and 113 KeV (6.4%)), therapy and diagnosis are simultaneously possible, and thus. it is attracting attention as a radioactive isotope for tumor therapy.

For the use mainly for medical purposes, research is being conducted for tumor therapy by labeling a monoclonal antibody with Lu-177, and as a representative result product thereof, there is an example of Zevalin, which is used for the treatment of lymphoma. Recently, with the development of Lu-177 prostate-specific membrane antigen (PSMA), which is used as a therapeutic agent for prostate cancer, and Lutathera, which is a therapeutic agent for neuroendocrine tumor, the utility value of therapy using the radioactive isotope Lu-177 is increasing.

Lu-177 can be produced by direct and indirect production methods as follows.
Direct production method: Lu-176 + n → Lu-177 + γ [¹⁷⁶Lu(n, γ)¹⁷⁷Lu]
Indirect production method: Yb-176 + n → Yb-177 + γ → Lu-177 + β⁻[¹⁷⁶Yb(n, γ)β ¹⁷⁷Lu]

Lu-177 produced by the direct production method has a very large nuclear reaction cross section of 2,090 barn, and thus, when 1 mg of the target of Lu-176 is irradiated with 1 × 10¹⁴ neutron flux for 1 day, a quantity of 70 GBq (1.8 Ci) of Lu-177 is theoretically produced. This corresponds to a ratio of Lu-176 and Lu-177 of 100:1.6, which includes 1.6% of the radioactive isotope and the rest of Lu-176 as a carrier. If the irradiation time is increased, it is possible to obtain a Lu-177 radioisotope, which generally corresponds to 1 to 7%.

In the indirect production method, the nuclear reaction cross section of ytterbium-176 (Yb-176) is 2.85 barn, and under the above conditions, about 975 MBq (26.36 mCi) of Yb-177 and 85 MBq (2.3 mCi) of Lu-177 are produced. As for the production amount of isotopes, the indirect method produces only about 1 to 2% compared to the direct method.

Nevertheless, for the use as a pharmaceutical product, the presence of many carriers other than therapeutic radioisotopes is not preferred. This is because, in order to label a drug with a radioactive isotope produced by the direct method, a 20-fold to 100-fold higher amount of the labeling target is inevitably used, and thus, risks and side effects from therapy may be inherent to the patient.

In addition, Lu-177 produced by the direct production method is produced by including Lu-177m, which a radioactive isotope as a side reaction product. It exists as a carrier in an amount corresponding to about 0.4% and has a half-life of 160 days, which can act as a disadvantage in the treatment of patients and the processing of radioactive waste disposal and the like

Although the production amount of Lu-177 using the direct production method is very high, it has a disadvantage of the high carrier content and the side reaction of Lu-177m, which inevitably has a low medical utility value.

In order to solve this problem, a technique of separating Lu-177, which is a target substance, has been developed using an indirect production method that targets and produces a target element and other elements. Research on the separation method of carrier-free lutetium has been in progress since the 1950s.

In 1956, G. R. Choppin performed column separation with a cation exchange resin under high temperature conditions using an ammonium HIBA (hydroxy isobutyrate) solution for the separation between lanthanide and actinide elements in J. Inorg. Nucl. Chem, and in 1994, P. S. Balasubramanian substituted NH₄⁺, Cd²⁺ and Zn²⁺ in a cation exchange resin for Lu-177 separation, and then performed the separation using a HIBA solution as an eluent. In these methods, there may be a probability that Cd²⁺ and Zn²⁺ ions may exist even after the separation.

In US Patent No. 6,716,353 B1, the separation of Lu-177 was performed under acidic conditions using a resin including a phosphate group as an indirect production method. This method has a disadvantage in that Yb is eluted first and then Lu is eluted during column separation, and thus, Yb may be included in the separated Lu, which may limit its use as a pharmaceutical product.

In Germany, as a method of obtaining carrier-free Lu-177 through DE 102011051868.1 (Korean Patent Application Laid-Open No. 10-2014-0071324), there is a method of substituting the hydrogen ions of a cation exchange resin with ammonium ions in the first column (free column), loading the dissolved target and selecting one of several solutes such as HIBA and the like in the second column (main separation column) to separate and purify as a solution including ammonium ions. In this case, a total of three columns including the third column (purification column) are used. The main separation column is in a state where no pre-treatment is used, and the eluent is introduced into the cation exchange resin, and saturation and equilibrium with the cation exchange resin are repeated, proceeding from the top to the bottom of the column. The separation of Lu is achieved by forming a mutual equilibrium relationship with the functional group in the cation exchange resin and the eluent in a saturated state. Since this method requires time to achieve saturation, it takes a lot of time in terms of the separation time, and in order to solve this problem and increase the resolution, it was solved by providing an eluent gradient from a low concentration to a high concentration.

Accordingly, the situation is that it is necessary to develop a method for improving the resolution such that the separated lutetium does not include ytterbium, and a method for separating and purifying lutetium that does not need to provide an eluent gradient to increase the resolution and that can remove ions such as cadmium and the like after the separation.
RU 2542733 C relates to a method of producing isotopes for radiation medicine. The method includes irradiating a target with neutrons and separating Lu from the irradiated target. The method produces Lu radioisotopes without a carrier in significant amounts (tens of curies) on standard research reactors, using domestic raw materials and chemicals to produce, separate and clean the Lu radioisotope.

### [Disclosure]

### [Technical Problem]

The present invention has been devised to solve the aforementioned problems, and the problem to be solved by the present invention is to provide a method for separating and purifying lutetium-177 using chromatography, in which the resolution of lutetium and ytterbium is significantly improved compared to the conventional separation and purification methods.

### [Technical Solution]

In order to solve the aforementioned problem, the present invention provides a method for separating carrier-free lutetium-177 (Lu-177), which sequentially performs chromatography for a mixture including a compound of ytterbium and lutetium-177 (Lu-177) produced by irradiating neutrons at a compound of ytterbium-176 (Yb-176) as a target by 2 columns below:
1) separation column: a separation column with a first cation exchange resin as a stationary phase, and saturated with a first eluent including at least one of primary to quaternary aminium ions and a chelating agent in a column filled with the stationary phase; and
2) purification column: a purification column with a second cation exchange resin as a stationary phase, and impregnated with water,
wherein the first eluent is a single eluent without a concentration gradient and is used as a mobile phase, wherein the separation column is saturated with the first eluent before injection of the first eluent used as the mobile phase, and wherein the first and second cation exchange resins may be the same or different.

According to a preferred exemplary embodiment of the present invention, lutetium-177 (Lu-177) may be eluted first in the separation column, and then ytterbium (Yb) may be eluted.

According to a preferred exemplary embodiment of the present invention, when lutetium-177 is eluted in the separation column, the first eluent including the eluted lutetium-177 may be introduced into the purification column, and
wherein when ytterbium is subsequently eluted in the separation column, a second eluent including at least one of primary to quaternary aminium ions and a chelate agent may be used as a mobile phase, and the separated ytterbium may be introduced into a separate column to perform chromatography to obtain ytterbium.

According to a preferred exemplary embodiment of the present invention, the cation exchange resin may include at least one selected from a sulfate group (-SO₃H), a phosphate group (-OP(O)(OH)₂ or -P(O)(OH)₂) and a carboxyl group (-C(O)OH).

According to a preferred exemplary embodiment of the present invention, the aminium ion may be an ion represented by Chemical Formula 1 below, a secondary to quaternary aminium ion including a heteroalipathic ring or heteroaromatic ring of 5 to 30 atoms including a nitrogen atom in a ring, or a mixture thereof.

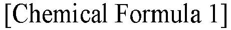

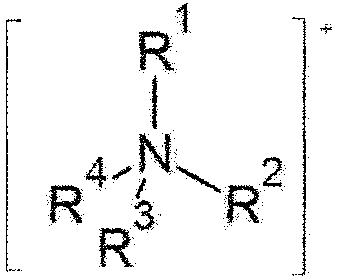

In Chemical Formula 1, at least one of R¹, R², R³ and R⁴ is a substituted or unsubstituted C₁ to C₈ linear or branched alkyl group and the rest is hydrogen, and the R¹, R², R³ and R⁴ are identical to or different from each other.

According to a preferred exemplary embodiment of the present invention, the substituted C₁ to C₈ linear or branched alkyl group may be substituted with a hydrophilic functional group.

In addition, according to a preferred exemplary embodiment of the present invention, the hydrophilic functional group may be each independently one selected from a hydroxyl group, a carbonyl group, an amine group, a carboxyl group, an ester group, an alkoxy group, an amide group, an imine group, an oxime group, a thiol group, a sulfide group, a sulfoxide group, a thioketone group and a thioester group.

According to a preferred exemplary embodiment of the present invention, the aminium ion may be a primary aminium ion.

According to a preferred exemplary embodiment of the present invention, the chelating agent may be a compound of C₂ to C₁₂ monocarboxylic acid, dicarboxylic acid, tricarboxylic acid or tetracarboxylic acid which further includes a hydrophilic functional group other than a carboxyl group, or a salt thereof.

According to a preferred exemplary embodiment of the present invention, the chelating agent may be 2-hydroxyisobutyric acid (2-HIBA).

According to a preferred exemplary embodiment of the present invention, the concentration of the chelating agent in the first eluent may be 0.01M to 0.5M.

According to a preferred exemplary embodiment of the present invention, the concentration of the chelating agent in the second eluent may be 0.1M to 1.0M.

According to a preferred exemplary embodiment of the present invention, the concentration of the aminium ion in the first eluent may be 0.01M to 1.0M.

### [Advantageous Effects]

According to the method for separating lutetium-177 of the present invention, it is possible to produce carrier-free lutetium-177 due to the improved resolution without using a gradient eluent. Accordingly, it is also possible to achieve the effects of reducing the amount of expensive cation exchange resins used and the amount of waste generated, and the carrier-free lutetium-177 can be separated within a short period of time.

In addition, since the eluent without a concentration gradient is used, there is an advantage in that the eluent can be recycled, and the separation and purification processes can be simplified.

### [Description of Drawings]

FIG. 1 is a diagram schematically showing the structure of an apparatus for the separation of lutetium-177 according to a preferred exemplary embodiment of the present invention.
FIG. 2 is a chromatogram in which an eluent including ammonium ions and HIBA is saturated in a separation column filled with a cation exchange resin, and stable isotopes of lutetium and ytterbium are separated.
FIG. 3 is a chromatogram in which an eluent including ammonium ions and HIBA is saturated in a separation column filled with a cation exchange resin, and radioisotopes of lutetium and ytterbium are separated.
FIG. 4 is a chromatogram in which an eluent including methylamine cations and HIBA is saturated in a cation exchange resin column, and stable isotopes of lutetium and ytterbium are separated.
FIG. 5 is a chromatogram in which an eluent including ethylamine cations and HIBA is saturated in a separation column filled with a cation exchange resin, and stable isotopes of lutetium and ytterbium are separated.
FIG. 6 is a chromatogram in which an eluent including ethanolamine cations and HIBA is saturated in a separation column filled with a cation exchange resin, and stable isotopes of lutetium and ytterbium are separated.
FIG. 7 is a chromatogram in which an eluent including diethylamine cations and HIBA is saturated in a separation column filled with a cation exchange resin, and stable isotopes of lutetium and ytterbium are separated.
FIG. 8 is a chromatogram in which an eluent including ethylenediamine cations and HIBA is saturated in a separation column filled with a cation exchange resin, and stable isotopes of lutetium and ytterbium are separated.
FIG. 9 is a chromatogram in which an eluent including methylamine cations and HIBA is saturated in a separation column filled with a silica support-based cation exchange resin, and stable isotopes of lutetium and ytterbium are separated.

### [Best Mode]

According to the method for separating lutetium-177 of the present invention, it is possible to produce carrier-free lutetium-177 due to the improved resolution without using a gradient eluent. Accordingly, it is also possible to achieve the effects of reducing the amount of expensive cation exchange resins used and the amount of waste generated, and the carrier-free lutetium-177 can be separated within a short period of time.

In addition, since the eluent without a concentration gradient is used, there is an advantage in that the eluent can be recycled, and the separation and purification processes can be simplified.

### [Modes of the Invention]

As described above, it was difficult to obtain high-purity lutetium-177 by the conventional lutetium separation method, and it had disadvantages that it required a lot of time for separation, such as requiring many separation columns and the like, and required a concentration gradient as an eluent.

Accordingly, as a result of devoting efforts to research and development in order to solve these problems, the inventors of the present invention have derived the present invention.

The present invention follows the indirect production method targeting ytterbium-176 (Yb-176) instead of the direct production method, which is a method of irradiating neutrons by targeting lutetium-176, which is an isotope of lutetium-177 (Lu-177). When the direct production method is followed, the ratio of lutetium-177 in the produced lutetium is within about 2%, and there is a problem in that the ratio of the carrier is very high. The indirect production method produces less isotope lutetium-177 compared to the direct production method, but the content of other isotopes is small and the amount of side reaction products is remarkably small, and thus, when lutetium is separated from the mixture with high purity, it has an advantage of having more excellent utility as a medical label.

A schematic reaction formula of the neutron capture reaction of the indirect production method is as follows.$Yb 176 + n {\to }^{177} Yb + y {\to }^{177} Lu + {β}^{-} \left[Yb 176\left(n, y\right){β}^{177}Lu\right]$

The present invention specifically relates to a method for separating lutetium-177 produced by the neutron capture reaction from ytterbium (ytterbium-176 and ytterbium-177). The separation method is by chromatography, and the present invention has confirmed that the resolution of the chromatogram is significantly different as the stationary phase and the mobile phase of the column are adjusted, and accordingly, it has provided a method for separating carrier-free lutetium-177 that can save time and costs.

The method for separating carrier-free lutetium-177 according to the present invention is a method for separating a mixture including a compound of ytterbium and lutetium-177 (Lu-177) produced by irradiating neutrons to a compound of ytterbium-176 (Yb-176) according to the indirection production method by sequential chromatography using the following two-step columns.
1) Separation column: a separation column with a first cation exchange resin as a stationary phase, and saturated with a first eluent including at least one of primary to quaternary aminium ions and a chelating agent in a column filled with the stationary phase; and
2) Purification column: a purification column with a second cation exchange resin as a stationary phase, and impregnated with water.

Herein, the mobile phase in the separation column is the first eluent and the first eluent is a single eluent without a concentration gradient. The separation column is saturated with the first eluent before injection of the first eluent used as the mobile phase, and the first and second cation exchange resins may be the same or different.

Chromatography in the separation column may finely change the polarity of an eluent by including one or more primary to quaternary aminium ions (NR₄⁺, R is each independently an alkyl group or hydrogen) substituted with one or more alkyl groups together with ammonium ions (NH4⁺), or instead of ammonium ions introduced together with a chelating agent to adjust the pH of the eluent in the conventional lutetium separation method.

When aminium ions are used, the theoretical plate of the separation column may be improved to increase the retention times of lutetium-177 and ytterbium. Accordingly, while shortening the length of the column, it is possible to have the same resolution as the conventional lutetium separation method, and there is an advantage in that the amount of the cation exchange resin used may be reduced.

The aminium ion may be an ion represented by Chemical Formula 1 below, a secondary to quaternary aminium ion including a heteroalipathic ring or heteroaromatic ring of 5 to 30 atoms including a nitrogen atom in a ring, or a mixture of two or more thereof.

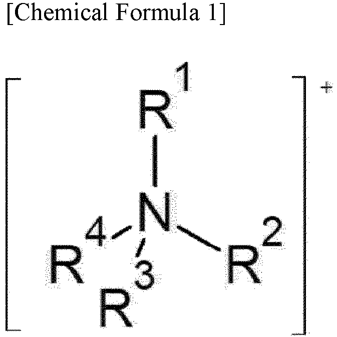

In Chemical Formula 1, at least one of R¹, R², R³ and R⁴ is a substituted or unsubstituted C₁ to C₈ linear or branched alkyl group and the rest is hydrogen, and the R¹, R², R³ and R⁴ are identical to or different from each other.

Herein, the substituted alkyl group means that a reactive functional group is bound to at least one carbon of the alkyl group, and the reactive functional group preferably means a hydrophilic functional group.

Preferably, the hydrophilic functional group may be each independently one selected from a hydroxyl group, a carbonyl group, an amine group, a carboxyl group, an ester group, an alkoxy group, an amide group, an imine group, an oxime group, a thiol group, a sulfide group, a sulfoxide group, a thioketone group and a thioester group.

More preferably, it means a hydroxyl group.

The column retention time of lutetium-ytterbium in the column has a tendency for ammonium ions < primary aminium ions < hydroxy primary aminium ions < secondary aminium ions < tertiary aminium ions < quaternary aminium ions, depending on the ions included in the eluent. This is also consistent with the tendency of the column separation time.

As the order of the amine increases, that is, since the quaternary aminium ions have a lower material polarity than the primary aminium ions, the lanthanide compounds stay longer in the cation exchange resin in the equilibrium relationship with the cation exchange resin, and as a result, the column retention time becomes longer. Therefore, the chromatography in the case of including high-order aminium ions increases the elution time compared to the case of using an eluent including low-order aminium ions.

Conversely, as the order is lowered, that is, since the ammonium ions have a higher material polarity than the primary or quaternary aminium ions, the equilibrium of the mobile phase is more biased than that of the cation exchange resin, which is a stationary phase, and thus, the column retention time is reduced.

Each of ytterbium and lutetium has different equilibrium relationships and binding affinities between the cation exchange resin as a stationary phase and the eluent as a mobile phase, and eventually the theoretical plate is formed for each ion.

If the mobile phase is changed by changing the aminium ion of the mobile phase, each of ytterbium and lutetium causes changes in the equilibrium relationship and binding affinity between the eluent and the stationary phase, resulting in a difference in resolution.

Since the method for separating lutetium-177 according to the present invention has significantly improved resolution of lutetium compared to the conventional method of using an eluent including ammonium ions, it has an advantage of being able to obtain carrier-free lutetium-177 with high purity even though lutetium is obtained by the indirect production method.

In a preferred exemplary embodiment of the present invention, the aminium ion may include a primary aminium ion or a primary aminium ion substituted with a hydroxyl group, and more preferably, a primary aminium ion substituted with an alkyl group having a small number of carbon atoms, or a methylamine cation, an ethylamine cation and an ethanolamine cation, which are aminium ions substituted with a hydroxyl group in the amine.

In this case, not only the first elution time is suitable within 2 hours compared to the case of including high-order aminium ions, but also the resolution of the case of using the primary amine is improved, and in addition, the elution between lutetium and ytterbium is remarkably distinguished, and it is more advantageous because the elution time is short.

In a preferred exemplary embodiment of the present invention, the concentration of the chelating agent in the first eluent may be 0.01 to 0.5M, and the concentration of the aminium ions may be 0.01M to 1.0M.

If the concentration of the chelating agent and aminium ions is less than 0.01M, there may be a problem in that the elution time becomes longer, and conversely, if the concentration is more than 0.5M, there may be a problem in that it is difficult to separate lutetium-177 from ytterbium because the elution time is rapidly shortened.

In addition, preferably, the chelating agent may be a compound of C₂ to C₁₂ monocarboxylic acid, dicarboxylic acid, tricarboxylic acid or tetracarboxylic acid which further includes a hydrophilic functional group other than a carboxyl group, or a salt thereof.

For example, the chelating agent may be one selected from 2-hydroxyisobutyric acid (2-HIBA), 3-hydroxybutyric acid (3-HIBA), 3-hydroxypropanoic acid, tartaric acid, lactic acid, citric acid and glycolic acid.

More preferably, the chelating agent may be 2-HIBA. When 2-HIBAis used as a chelating agent, there is an advantage in that it may be easily separated and removed compared to other compounds due to the good formation of a weak chelate with metal ions in the structure.

In addition, the cation exchange resin is a stationary phase of the separation column and the purification column, and the type of the resin may be the same or different in the separation column and the purification column.

The cation exchange resin may include at least one selected from a sulfate group (-SO₃H), a phosphate group (-OP(O)(OH)₂ or -P(O)(OH)₂) and a carboxyl group (-C(O)OH).

In addition, for the cation exchange resin, it is preferable to use a resin including at least one selected from the sulfate group, phosphate group and carboxyl group with a polymer, an inorganic substance or a mixture of a polymer and an inorganic substance as a support.

More preferably, the cation exchange resin may be at least one selected from resins of materials having a sulfate group in the form of polymers. However, the present invention is not necessarily limited thereto, and a suitable one may be selected from the cation exchange resins generally used in the art according to the polarity, pH, and separation conditions of an eluent.

In addition, the separation method of the present invention is characterized in that the separation column is saturated with an eluent before injecting the eluent. By including an eluent in the separation column in advance, there is an advantage in that the separation may be easily performed even with a single eluent without using an eluent having a concentration gradient. If the separation is performed without saturating with an eluent in advance, the total separation time becomes longer because the separation proceeds while the eluent flows to create equilibrium with the column, and thus, the use of an eluent having a concentration gradient is forced.

According to a preferred exemplary embodiment of the present invention, lutetium may be eluted first in the separation column, and then ytterbium may be eluted.

In addition, the eluted lutetium may be introduced into a purification column using the eluted solution itself as an eluent. Subsequently, the eluted ytterbium may be purified by a separate column different from the purification column.

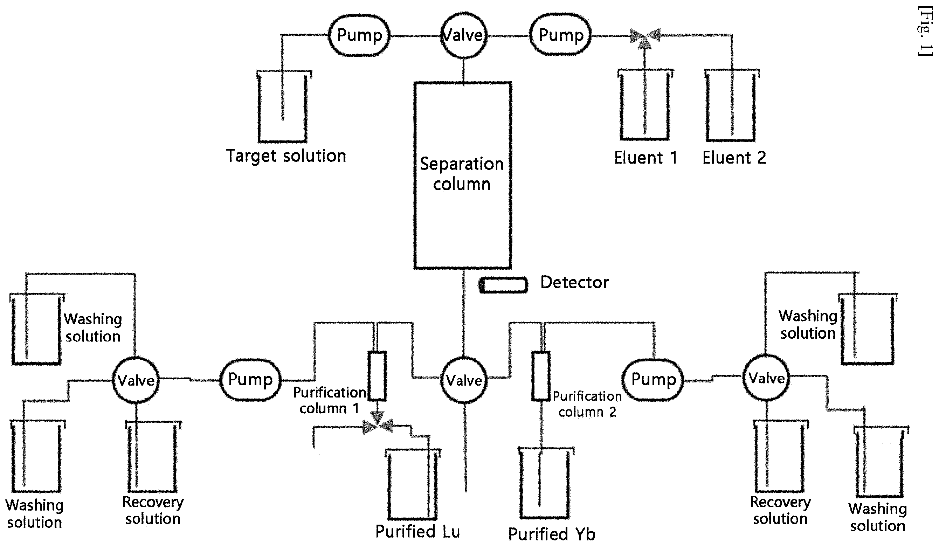

FIG. 1 is a schematic structural diagram of an apparatus for the separation of carrier-free lutetium-177 according to the present invention. Referring to FIG. 1, it can be confirmed that Purification Column 1 for purifying lutetium which is eluted first from the separation column and Purification Column 2 for purifying ytterbium which is subsequently eluted are separately provided.

In a preferred exemplary embodiment of the present invention, a mixture of lutetium and ytterbium to be introduced into the separation column is dissolved with hydrochloric acid or nitric acid to form a M³⁺(Cl⁻)₃ or M³⁺(NO₃⁻)₃ compound, and then heated to remove excess acid, and it may be in the form of dissolving the same in water. However, the form of the mixture to be introduced into the column may be selected within the range of a level that may be substituted or changed by exerting ordinary creativity in the generally used method and the conventional method.

In addition, lutetium-177 which is purified through a purification column may be obtained in the form of a required compound using the conventional method, and this method is within the scope of practice by those skilled in the art.

Hereinafter, the present invention will be described in more detail with reference to examples.

### <Example>

### Comparative Example 1

An aqueous solution adjusted to pH 4.2 by adding 2-HIBA (0.07M) as a chelating agent and 25% aqueous ammonia in a separation column (a cylindrical column with a diameter of 10 mm and a height of 70 mm) filled with a stationary-phase cation exchange resin containing a sulfate group was used as a first eluent, and it was injected until the column was completely saturated.

50 mg of ytterbium oxide (Yb₂O₃) was irradiated with neutrons for 5 days in 1 × 10¹⁴ neutrons in a research reactor. The formed ytterbium oxide-lutetium mixture (Yb₂O₃-¹⁷⁷Lu₂O₃) was dissolved in saturated hydrochloric acid (c-HCl, 11.4M) to prepare a metal chloride (MCl, the M is an arbitrary metal ion) state. Excess acid was removed by heating the prepared sample, and 1 mL of water was added to prepare an YbCl₃-¹⁷⁷LuCl₃ aqueous solution.

Elution was carried out while flowing the YbCl³-¹⁷⁷LuCl³ aqueous solution through the separation column at a rate of 1.5 mL/min.

First, the eluent including the eluted lutetium-177 compound was injected into a purification column (a cylindrical column with a diameter of 5 mm and a height of 20 mm) filled with the same cation exchange resin as the separation column and saturated with water.

The purification column in which the lutetium-177 compound was collected was washed with a washing solution to remove organic and inorganic components in the eluent. Afterwards, lutetium-177 was recovered in the purification column using a recovery solution including a strong acid. The recovered solution was heated to 150°C to remove the acid component, and then dissolved in 1 mL of 0.01M hydrochloric acid to obtain high-purity carrier-free lutetium-177.

The elution time in the separation column was 40 minutes or more.

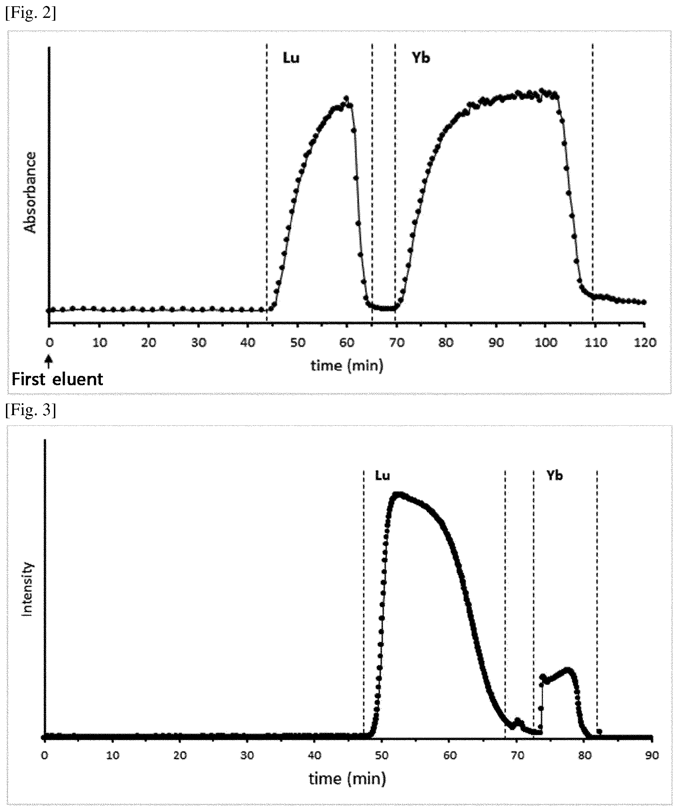

The elution of lutetium and ytterbium was measured through a gamma-ray detector, and the chromatogram for each case is shown in FIG. 3.

### Comparative Example 2

It was carried out in the same manner as in Comparative Example 1, but a mixture of ytterbium oxide and lutetium oxide that was not irradiated with neutrons was treated in the same manner to prepare a mixture of ytterbium chloride and lutetium chloride as a sample, and the same separation and purification processes were performed.

The eluted lutetium and ytterbium were measured using a UV detector, and the chromatogram is shown in FIG. 2.

### Example 1

It was carried out in the same manner as in Comparative Example 2, except that the first eluent including methylaminium ions, which are primary aminium ions, at the same concentration was used instead of aqueous ammonia.

The elution of lutetium was obtained from 77 minutes for about 20 minutes, and at 120 minutes, in order to facilitate the recovery of ytterbium, which was the target material, elution was performed by replacing with a second eluent (0.2M HIBA aqueous solution adjusted to pH 4.2 using methylaminium), which was a pH 4.2 aqueous solution including 0.2 M HIBA.

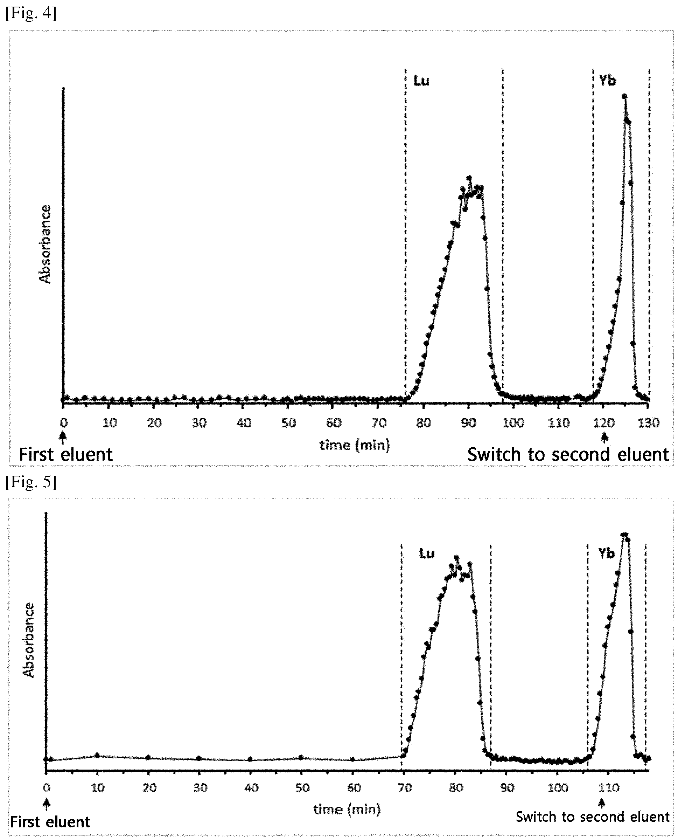

Similarly, the chromatogram obtained through the same detector is shown in FIG. 4.

### Example 2

It was carried out in the same manner as in Comparative Example 2, except that the first eluent including ethylaminium ions, which are primary aminium ions, at the same concentration was used instead of aqueous ammonia.

The elution of lutetium was obtained from 70 minutes for about 20 minutes, and at 110 minutes, in order to facilitate the recovery of ytterbium, which was the target material, elution was performed by replacing with a second eluent (0.2M HIBA aqueous solution adjusted to pH 4.2 using ethylaminium) at a higher concentration than the first eluent.

Similarly, the chromatogram obtained through the same detector is shown in FIG. 5.

### Example 3

It was carried out in the same manner as in Comparative Example 2, except that the first eluent including ethanolaminium ions, which are primary aminium ions substituted with a hydroxyl group, at the same concentration was used instead of aqueous ammonia.

The elution of lutetium was performed from about 120 minutes for about 24 minutes, and at 177 minutes, in order to facilitate the recovery of ytterbium, which was the target material, elution was performed with a second eluent (0.2M HIBA aqueous solution adjusted to pH 4.2 using ethanolaminium) at a higher concentration than the first eluent.

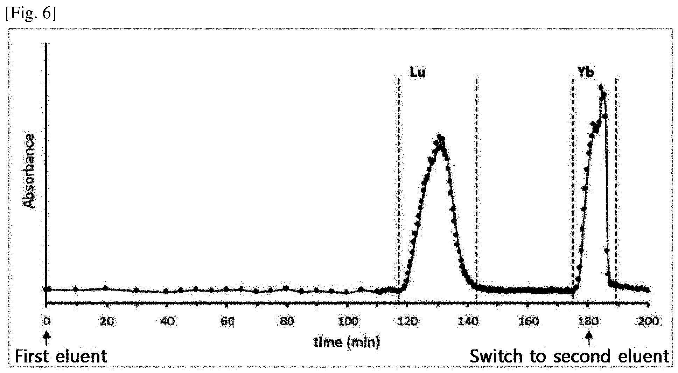

Similarly, a chromatogram obtained through the same detector is shown in FIG. 6.

### Example 4

It was carried out in the same manner as in Comparative Example 2, except that the first eluent including diethyl aminium ions, which are secondary aminium ions, at the same concentration was used instead of aqueous ammonia.

As a result of the elution, lutetium was not eluted for 4 hours or more.

As a result of eluting with a second eluent (0.2 M HIBA aqueous solution adjusted to pH 4.2 using diethylaminium), lutetium started to be eluted at 70 minutes, but it was confirmed that it was eluted by being mixed with ytterbium.

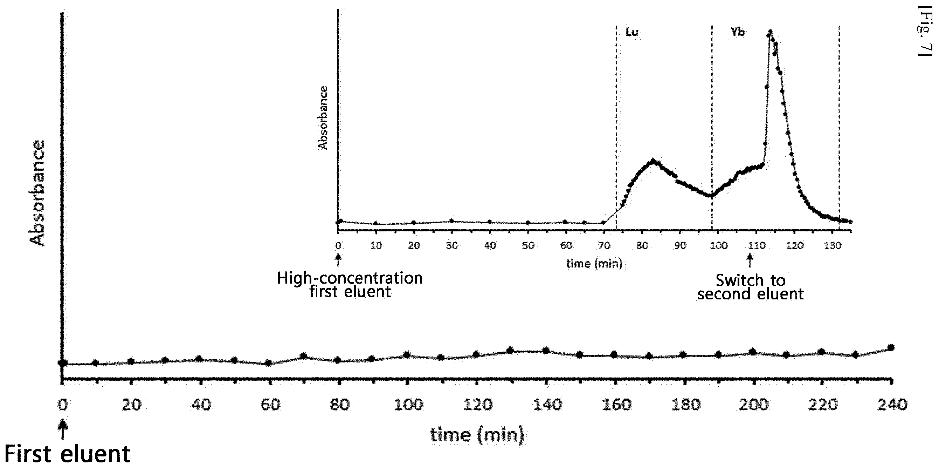

The chromatogram obtained through the same detector is shown in FIG. 7.

### Example 5

It was carried out in the same manner as in Comparative Example 2, except that the first eluent including ethylenediamine ions, which are primary aminium ions substituted with an amino group, at the same concentration was used instead of aqueous ammonia.

As a result of eluting with the first eluent, lutetium and ytterbium were separated within 15 minutes. Ytterbium was also detected in some lutetium fractions during re-experiment.

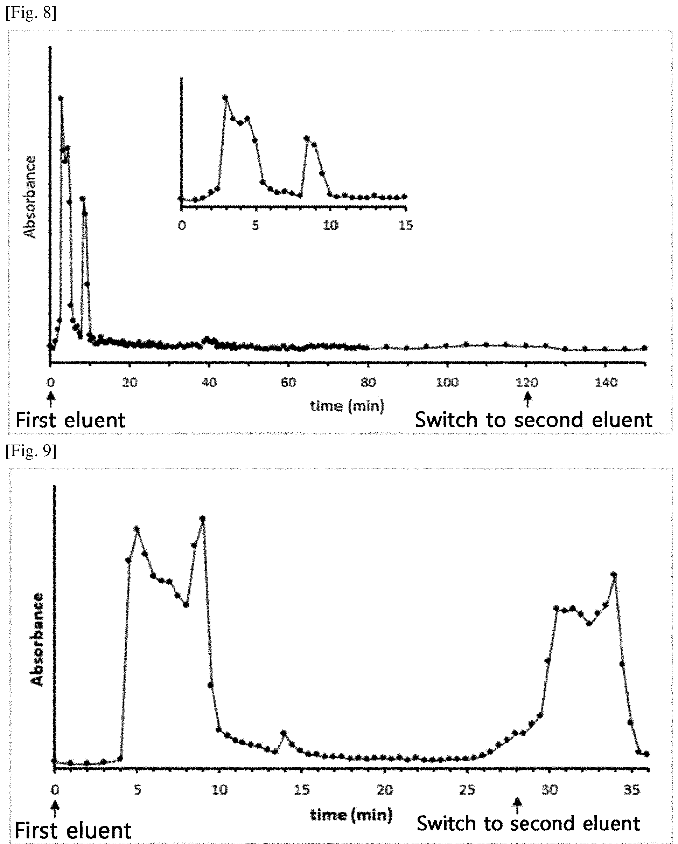

The chromatogram obtained through the same detector is shown in FIG. 8.

### Example 6

It was carried out in the same manner as in Comparative Example 2, except that a silica support was used as a cation exchange resin, and the first eluent including methylaminium ions, which are primary aminium ions, at the same concentration was used instead of aqueous ammonia.

As a result of eluting with the first eluent, it was confirmed that lutetium was eluted 4 minutes after the elution, and eluted over about 7 minutes. As a result of confirming the metal component of the separated eluent, some ytterbium was also confirmed.

The chromatogram obtained through the same detector is shown in FIG. 9.

Table 1 below shows the elution times of lutetium and ytterbium, respectively, when elution was performed by the methods according to the examples and comparative examples.

**[Table 1]**

| Classification | Start of Lu elution (minute) | End of Lu elution (minute) | Elution time interval (minute) | Start of Yb elution (minute) | Remark |
|---|---|---|---|---|---|
| Comparative Example 1 | 45 | 65 | 6 | 71 | |
| Comparative Example 2 | 47 | 68 | 6 | 74 | |
| Example 1 | 77 | 98 | 20 | 118 | |
| Example 2 | 70 | 87 | 20 | 107 | |
| Example 3 | 118 | 143 | 34 | 177 | |
| Example 4 | - | - | - | - | No elution for 4 hours or more |
| Example 5 | 3 | 7 | 1 | 8 | Lu and Yb were eluted almost at the same time |
| Example 6 | 4 | 11 | 0 | 4 | |

As can be confirmed in Table 1 above, in the separation methods according to Examples 1 to 3 using primary aminium or hydroxy-substituted primary aminium ions in the eluents instead of ammonium ions, the elution time was slightly longer, but it was confirmed that the separation clearly occurred by having a significant time interval between lutetium and ytterbium. In Example 4, the resolution was further improved by using secondary aminium ions, but instead, there was a disadvantage in that the elution time was increased by nearly two times.

In Example 5, it was found that by using aminium ions having two amino groups, the resolution was rather poor compared to the ammonium ions.

In Example 6, it was confirmed that the resolution was rather reduced as a result of using the silica support for the stationary phase.

### [Industrial Applicability]

According to the method for separating lutetium-177 of the present invention, it is possible to produce carrier-free lutetium-177 due to the improved resolution without using a gradient eluent. Accordingly, it is possible to achieve the effects of reducing the amount of expensive cation exchange resins used and the amount of waste generated, and the carrier-free lutetium-177 can be separated within a short period of time.

In addition, since the eluent without a concentration gradient is used, there is an advantage in that the eluent can be recycled, and the separation and purification processes can be simplified.

## Claims

1. A method for separating carrier-free lutetium-177 (Lu-177), which sequentially performs chromatography for a mixture comprising a compound of ytterbium and lutetium-177 (Lu-177) produced by irradiating neutrons at a compound of ytterbium-176 (Yb-176) as a target by 2 columns below:
1) separation column: a separation column with a first cation exchange resin as a stationary phase, and saturated with a first eluent comprising at least one of primary to quaternary aminium ions and a chelating agent in a column filled with the stationary phase; and
2) purification column: a purification column with a second cation exchange resin as a stationary phase, and impregnated with water, **characterized in that**
the first eluent is a single eluent without a concentration gradient and is used as a mobile phase, wherein the separation column is saturated with the first eluent before injection of the first eluent used as the mobile phase, and wherein the first and second cation exchange resins may be the same or different.

2. The method of claim 1, wherein lutetium-177 (Lu-177) is eluted first in the separation column, and then ytterbium (Yb) is eluted.

3. The method of claim 2, wherein when lutetium-177 is eluted in the separation column, the first eluent comprising the eluted lutetium-177 is introduced into the purification column, and
wherein when the separation of lutetium-177 is completed or ytterbium is eluted in the separation column, a second eluent comprising at least one of primary to quaternary aminium ions and a chelate agent is used as a mobile phase, and the separated ytterbium is introduced into a separate column to perform chromatography to obtain ytterbium.

4. The method of claim 3, wherein the concentration of the chelate agent and the primary to quaternary aminium ions of the second eluent is higher than that of the first eluent.

5. The method of claim 1, wherein the cation exchange resin comprises at least one selected from a sulfate group (-SO₃H), a phosphate group (-OP(O)(OH)₂ or - P(O)(OH)₂) and a carboxyl group (-C(O)OH) in an organic, inorganic or organic-inorganic mixture support.

6. The method of claim 1, wherein the aminium ion is an ion represented by Chemical Formula 1 below, a secondary to quaternary aminium ion comprising a heteroalipathic ring or heteroaromatic ring of 5 to 30 atoms including a nitrogen atom in a ring, or a mixture thereof: 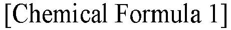 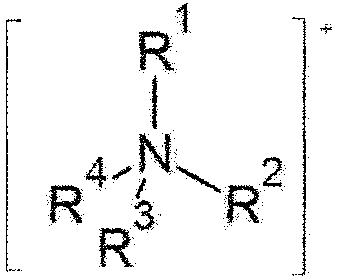 wherein in Chemical Formula 1, at least one of R¹, R², R³ and R⁴ is a substituted or unsubstituted C₁ to C₈ linear or branched alkyl group and the rest is hydrogen, and wherein the R¹, R², R³ and R⁴ are identical to or different from each other.

7. The method of claim 6, wherein the substituted C₁ to C₈ linear or branched alkyl group is substituted with a hydrophilic functional group.

8. The method of claim 7, wherein the hydrophilic functional group is each independently one selected from a hydroxyl group, a carbonyl group, an amine group, a carboxyl group, an ester group, an alkoxy group, an amide group, an imine group, an oxime group, a thiol group, a sulfide group, a sulfoxide group, a thioketone group and a thioester group.

9. The method of claim 1, wherein the aminium ion is a primary aminium ion.

10. The method of claim 1, wherein the chelating agent is a compound of C₂ to C₁₂ monocarboxylic acid, dicarboxylic acid, tricarboxylic acid or tetracarboxylic acid which further comprises a hydrophilic functional group other than a carboxyl group, or a salt thereof.

11. The method of claim 10, wherein the chelating agent is 2-hydroxyisobutyric acid (2-HIBA).

12. The method of claim 1, wherein the concentration of the chelating agent in the first eluent is 0.01M to 0.5M and/or wherein the concentration of the aminium ion in the first eluent is 0.01M to 1.0M.

13. The method of claim 3, wherein the concentration of the chelating agent in the second eluent is 0.1M to 1.0M.

14. The method of claim 1, wherein a purification step by the purification column introduces a second eluent comprising carrier-free lutetium-177 eluted in the separation column into the purification column, and comprises the steps of:
a) eluting the chelating agent and amine mixture included in the first eluent using an organic or inorganic acid having a concentration of 0.1M to 2M as a mobile phase; and
b) subsequently eluting carrier-free lutetium-177 with an organic or inorganic acid having a concentration of 3M to 12M as a mobile phase.

## Patentansprüche

1. Verfahren zum Abtrennen von trägerfreiem Lutetium-177 (Lu-177), das sequentiell Chromatographie für ein Gemisch, das eine Verbindung von Ytterbium und Lutetium-177 (Lu-177) umfasst, die durch Neutronenbestrahlung an einer Verbindung von Ytterbium-176 (Yb-176) als Target erzeugt wird, durch die nachstehenden 2 Säulen durchführt:
1) Trennsäule: eine Trennsäule mit einem ersten Kationenaustauscherharz als stationäre Phase, die in einer mit der stationären Phase gefüllten Säule mit einem ersten Eluenten gesättigt ist, der mindestens eines von primären bis quartären Aminiumionen und einen Chelatbildner umfasst; und
2) Reinigungssäule: eine Reinigungssäule mit einem zweiten Kationenaustauscherharz als stationäre Phase, die mit Wasser imprägniert ist, **dadurch gekennzeichnet, dass**
der erste Eluent ein einzelner Eluent ohne einen Konzentrationsgradienten ist und als mobile Phase verwendet wird, wobei die Trennsäule vor der Injektion des als mobile Phase verwendeten ersten Eluenten mit dem ersten Eluenten gesättigt wird, und wobei das erste und das zweite Kationenaustauscherharz gleich oder verschieden sein können.

2. Verfahren nach Anspruch 1, wobei in der Trennsäule zuerst Lutetium-177 (Lu-177) eluiert wird und dann Ytterbium (Yb) eluiert wird.

3. Verfahren nach Anspruch 2, wobei, wenn Lutetium-177 in der Trennsäule eluiert wird, der erste Eluent, der das eluierte Lutetium-177 umfasst, in die Reinigungssäule eingeführt wird, und
wobei, wenn die Abtrennung von Lutetium-177 abgeschlossen ist oder Ytterbium in der Trennsäule eluiert wird, ein zweiter Eluent, der mindestens eines von primären bis quartären Aminiumionen und einen Chelatbildner umfasst, als mobile Phase verwendet wird und das abgetrennte Ytterbium in eine separate Säule eingeführt wird, um eine Chromatographie durchzuführen, um Ytterbium zu erhalten.

4. Verfahren nach Anspruch 3, wobei die Konzentration des Chelatbildners und der primären bis quartären Aminiumionen des zweiten Eluenten höher ist als die des ersten Eluenten.

5. Verfahren nach Anspruch 1, wobei das Kationenaustauscherharz mindestens eine Gruppe, ausgewählt aus einer Sulfatgruppe (-SO₃H), einer Phosphatgruppe (-OP(O)(OH)₂ oder -P(O)(OH)₂) und einer Carboxylgruppe (-C(O)OH), in einem organischen, anorganischen oder organisch-anorganischen Mischträger umfasst.

6. Verfahren nach Anspruch 1, wobei das Aminiumion ein durch die nachstehende Chemische Formel 1 dargestelltes Ion ist, ein sekundäres bis quartäres Aminiumion, das einen heteroaliphatischen Ring oder heteroaromatischen Ring von 5 bis 30 Atomen einschließlich eines Stickstoffatoms in einem Ring umfasst, oder ein Gemisch davon 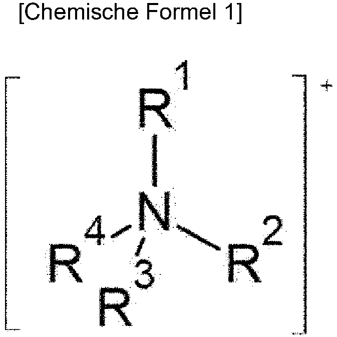 wobei in der Chemischen Formel 1 mindestens einer von R¹, R², R³ und R⁴ eine substituierte oder unsubstituierte lineare oder verzweigte C₁- bis C₈-Alkylgruppe ist und der Rest Wasserstoff ist, und wobei R¹, R², R³ und R⁴ gleich oder voneinander verschieden sind.

7. Verfahren nach Anspruch 6, wobei die substituierte lineare oder verzweigte C₁- bis C₈-Alkylgruppe mit einer hydrophilen funktionellen Gruppe substituiert ist.

8. Verfahren nach Anspruch 7, wobei die hydrophile funktionelle Gruppe jeweils unabhängig eine Gruppe ist, ausgewählt aus einer Hydroxylgruppe, einer Carbonylgruppe, einer Amingruppe, einer Carboxylgruppe, einer Estergruppe, einer Alkoxygruppe, einer Amidgruppe, einer Imingruppe, einer Oximgruppe, einer Thiolgruppe, einer Sulfidgruppe, einer Sulfoxidgruppe, einer Thioketongruppe und einer Thioestergruppe.

9. Verfahren nach Anspruch 1, wobei das Aminiumion ein primäres Aminiumion ist.

10. Verfahren nach Anspruch 1, wobei der Chelatbildner eine Verbindung einer C₂- bis C₁₂-Monocarbonsäure, Dicarbonsäure, Tricarbonsäure oder Tetracarbonsäure, die weiter eine andere hydrophile funktionelle Gruppe als eine Carboxylgruppe umfasst, oder ein Salz davon ist.

11. Verfahren nach Anspruch 10, wobei der Chelatbildner 2-Hydroxyisobuttersäure (2-HLBA) ist.

12. Verfahren nach Anspruch 1, wobei die Konzentration des Chelatbildners in dem ersten Eluenten 0,01 M bis 0,5 M beträgt und/oder wobei die Konzentration des Aminiumions in dem ersten Eluenten 0,01 M bis 1,0 M beträgt.

13. Verfahren nach Anspruch 3, wobei die Konzentration des Chelatbildners in dem zweiten Eluenten 0,1 M bis 1,0 M beträgt.

14. Verfahren nach Anspruch 1, wobei ein Reinigungsschritt durch die Reinigungssäule einen zweiten Eluenten, der in der Trennsäule eluiertes trägerfreies Lutetium-177 umfasst, in die Reinigungssäule einführt und die folgenden Schritte umfasst:
a) Eluieren des in dem ersten Eluenten enthaltenen Gemisches aus Chelatbildner und Amin unter Verwendung einer organischen oder anorganischen Säure mit einer Konzentration von 0,1 M bis 2 M als mobile Phase; und
b) anschließendes Eluieren von trägerfreiem Lutetium-177 mit einer organischen oder anorganischen Säure mit einer Konzentration von 3 M bis 12 M als mobile Phase.

## Revendications

1. Procédé de séparation de lutécium-177 (Lu-177) sans porteur, qui met séquentiellement en œuvre une chromatographie pour un mélange comprenant un composé d'ytterbium et de lutécium-177 (Lu-177) produit par une irradiation de neutrons au niveau d'un composé d'ytterbium-176 (Yb-176) en tant que cible par 2 colonnes ci-dessous :
1) colonne de séparation : une colonne de séparation pourvue d'une première résine échangeuse de cations en tant que phase fixe, et saturée par un premier éluant comprenant au moins un parmi des ions aminium primaire à quaternaire et un agent de chélation dans une colonne remplie de la phase fixe ; et
2) colonne de purification : une colonne de purification pourvue d'une deuxième résine échangeuse de cations en tant que phase statique, et imprégnée d'eau, **caractérisé en ce que**
le premier éluant est un éluant unique sans gradient de concentration et est utilisé comme phase mobile, dans lequel la colonne de séparation est saturée par le premier éluant avant injection du premier éluant utilisé comme phase mobile, et dans lequel les première et deuxième résines échangeuses de cations peuvent être identiques ou différentes.

2. Procédé selon la revendication 1, dans lequel le lutécium-177 (Lu-177) est élué d'abord dans la colonne de séparation, puis l'ytterbium (Yb) est élué.

3. Procédé selon la revendication 2, dans lequel le lutécium-177 est élué dans la colonne de séparation, le premier éluant comprenant le lutécium-177 élué est introduit dans la colonne de purification, et
dans lequel, lorsque la séparation de lutécium-177 est achevée ou que l'ytterbium est élué dans la colonne de séparation, un deuxième éluant comprenant au moins un parmi des ions aminium primaire à quaternaire et un agent de chélation est utilisé comme phase mobile, et l'ytterbium séparé est introduit dans la colonne de séparation pour mettre en œuvre une chromatographie afin d'obtenir de l'ytterbium.

4. Procédé selon la revendication 3, dans lequel la concentration de l'agent de chélation et des ions aminium primaire à quaternaire du deuxième éluant est supérieure à celle du premier éluant.

5. Procédé selon la revendication 1, dans lequel la résine échangeuse de cations comprend au moins un sélectionné parmi un groupe sulfate (-SO₃H), un groupe phosphate (-OP(O)(OH)₂ ou -P(O)(OH)₂) et un groupe carboxyle (-C(O)OH) dans un support de mélange organique, inorganique ou organique-inorganique.

6. Procédé selon la revendication 1, dans lequel
l'ion aminium est un ion représenté par la Formule Chimique 1 ci-dessous,
un ion aminium secondaire à quaternaire comprenant un cycle hétéroalipathique ou un cycle hétéroaromatique de 5 à 30 atomes incluant un atome d'azote dans un cycle, ou un mélange de ceux-ci 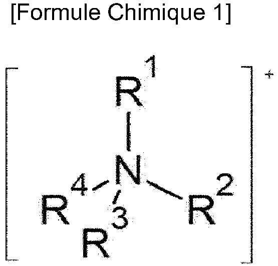 dans lequel, dans la Formule Chimique 1, au moins un de R¹, R², R³ et R⁴ est un groupe alkyle linéaire ou ramifié en C₁ à C₈ substitué ou non substitué et le reste est de l'hydrogène, et dans lequel les R¹, R², R³ et R⁴ sont identiques les uns aux autres ou différents les uns des autres.

7. Procédé selon la revendication 6, dans lequel le groupe alkyle linéaire ou ramifié en C₁ à C₈ substitué est substitué par un groupe fonctionnel hydrophile.

8. Procédé selon la revendication 7, dans lequel le groupe fonctionnel hydrophile est chacun indépendamment un groupe sélectionné parmi un groupe hydroxyle, un groupe carbonyle, un groupe amine, un groupe carboxyle, un groupe ester, un groupe alcoxy, un groupe amide, un groupe imine, un groupe oxime, un groupe thiol, un groupe sulfide, un groupe sulfoxyde, un groupe thiocétone et un groupe thioester.

9. Procédé selon la revendication 1, dans lequel l'ion aminium est un ion aminium primaire.

10. Procédé selon la revendication 1, dans lequel l'agent de chélation est un composé d'acide monocarboxylique, d'acide dicarboxylique, d'acide tricarboxylique ou d'acide tétracarboxylique en C₂ à C₁₂ qui comprend en outre un groupe fonctionnel hydrophile autre qu'un groupe carboxyle, ou un sel de celui-ci.

11. Procédé selon la revendication 10, dans lequel l'agent de chélation est de l'acide 2-hydroxyisobutyrique (2-HLBA).

12. Procédé selon la revendication 1, dans lequel la concentration de l'agent de chélation dans le premier éluant est de 0,01 M à 0,5 M et/ou dans lequel la concentration de l'ion aminium dans le premier éluant est de 0,01 M à 1,0 M.

13. Procédé selon la revendication 3, dans lequel la concentration de l'agent de chélation dans le deuxième éluant est de 0,1 M à 1,0 M.

14. Procédé selon la revendication 1, dans lequel
une étape de purification par la colonne de purification introduit, dans la colonne de purification, un deuxième éluant comprenant du lutécium-177 sans porteur élué dans la colonne de séparation, et comprend les étapes consistant à
a) éluer le mélange agent de chélation et amine inclus dans le premier éluant en utilisant un acide organique ou inorganique présentant une concentration de 0,1 M à 2 M en tant que phase mobile ; et
b) éluer ensuite du lutécium-177 sans porteur avec un acide organique ou inorganique présentant une concentration de 3 M à 12 M en tant que phase mobile.
